(19) **Europäisches Patentamt**
**European Patent Office**
**Office européen des brevets**

(11) **EP 2 265 131 B1**

(12) **EUROPEAN PATENT SPECIFICATION**

(45) Date of publication and mention
of the grant of the patent:
**31.08.2011 Bulletin 2011/35**

(51) Int Cl.:
*A23K 1/16* (2006.01)      *A23K 1/18* (2006.01)
*A23K 1/175* (2006.01)     *A23L 1/304* (2006.01)
*A23L 1/31* (2006.01)

(21) Application number: **08788811.1**

(22) Date of filing: **31.07.2008**

(86) International application number:
**PCT/HU2008/000093**

(87) International publication number:
**WO 2009/130522 (29.10.2009 Gazette 2009/44)**

(54) **APPLICATION OF A FEED ADDITIVE MIXTURE FOR IMPROVING MEAT QUALITY OF PIGS AND POULTRY**

ANWENDUNG EINER FUTTERMITTELZUSATZSTOFFMISCHUNG FÜR DIE VERBESSERUNG DER FLEISCHQUALITÄT VON SCHWEINEN UND GEFLÜGEL

UTILISATION D'UN MÉLANGE D'ADDITIF ALIMENTAIRE PERMETTANT D'AMÉLIORER LA QUALITÉ DE LA VIANDE DE PORC ET DE VOLAILLE

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **24.04.2008 HU 0800260**

(43) Date of publication of application:
**29.12.2010 Bulletin 2010/52**

(73) Proprietor: **Pro-Feed Kft.**
**2146 Mogyoród (HU)**

(72) Inventors:
• **SÁNDOR, Levente**
**H-2100 Gödöllő (HU)**
• **SÁNDOR, Gergő**
**H-1172 Budapest (HU)**
• **SÁNDOR, Zsombor**
**H-2100 Gödöllő (HU)**

(74) Representative: **Varga, Tamas Péter**
**Bertalan Lajos u. 20. fsz. 3/a.**
**1111 Budapest (HU)**

(56) References cited:
**GB-A- 1 263 841      US-A1- 2003 003 203**

• **TRCKOVA ET AL.: "Peat as a feed supplement for animals: a review" VET. MED. - CZECH, vol. 50, no. 8, 2006, - 2005 pages 361-377, XP002506094**
• **TRCKOVA ET AL.: "Effects of peat feeding on the performance and health status of fattening pigs and environmentally derived mycobacteria" VETERINARNI MEDICINA, vol. 51, no. 12, 2006, pages 533-543, XP002506095**
• **TRCKOVA ET AL.: "Effect of feeding treated peats as a supplement to newborn piglets on the growth, health status and occurence of conditionally pathogenic mycobacteria" VETERINARNI MEDICINA, vol. 51, no. 12, 2006, pages 544-554, XP002506096**
• **ANONYMOUS: "Effecs of humic acid on animals and humans" INTERNET CITATION, [Online] XP002506097 Retrieved from the Internet: URL: http://www.terratol.com/sitebuildercon tent/ sitebuilderfiles/EffectsofHumicAcidon AnimalsandHumans.pdf> [retrieved on 2008-11-28]**

EP 2 265 131 B1

**Description**

The subject of the invention is an application of a feed additive mixture for improving meat quality of pigs and poultry. The addition of this mixture results in the decrease of the post mortem drip loss of pork and poultry meat, their oxidative stability is increased, the pH-value changes favourably and the meat becomes more tender as well as the color will be more favourable.

It is a great challenge for the food producers to make foods meeting the consumers' demands not only regarding sufficient quantity, but proper quality as well. There is an ever increasing demand for proven healthy foods which are of good quality, hygienic, appetizing as well as containing high-quality components. The concept 'meat quality' is a very complex idea, including several groups of characteristics. When evaluating it, the color, the pH value, the palatability, and the water holding capacity closely interconnecting with each other are taken into consideration.

The genotype, the breeding technology, conditions, the quality of the nutrient fed to the animals, respectively the conditions of slaughtering of the farm animals are the factors considerably influencing the quality of food-products of animal origin, so the quality of the meat, too. Professionals dealing with husbandry are more and more concerned about providing the farm animals with such basic animal feed mixture and animal feed additive mixture admixed to it, which better the quality of the meat of the poultry and pigs consumed most by people. Within terms of improving the meat quality the increase of water holding capacity of the meat - specially increase of water holding capacity of meat by feeding - has not been highlighted so far.

The water holding capacity of the meat is characterized by the drip loss. The parameter can be characterized easily by the weightloss of the fresh meat during 24 hours at +4°C storing temperature. According to preliminary results of studies the drip loss of various meats is different, ranges between 4% even up to 12% depending on circumstantial conditions. In case of one kilogram meat it causes altogether 40-120g loss, which might seem low. Considering at the same time, that the split weight of a pig can be even 100 kgs, furthermore the fact, that slaughterhouses of bigger size can kill 1000 pigs per day, the loss can amount to a few million Forints a year. Solutions regarding decreasing the drip loss even if only by 10%, can count on considerable market demand, not only these days, but in the future as well.

It is not marginal either, that the socalled meat-juice leaving during the drip loss does not only include water, but a considerable amount of socalled sarcoplasmatic protein, decreasing the protein contents of the meat, i. e. its nutritional value as well. Consequently the inappropriate water holding capacity of meat causes loss for both the consumer and the meat industry. It causes financial loss for the consumer, because after the preparation including water loss they can serve a significantly smaller quantity of food compared to the quantity of the raw meat bought by them. The processing industry aims to achieve not only minimal drip loss, but wants to use such raw materials which can absorb added water necessary for the technology, respectively other additives, eg. pickle in the course of preparation of products. The meat having low water holding capacity is not suitable for producing ham-type respectively pickled products.

The further importance of the invention is justified by the fact, that today in our region and in Hungary as well 80% of meat consumption of 87kg/person/year is pork and poultry meat. So our invention relates to an area where the results concern wide stratum of people.

In the state of the art the P 03 03225 Hungarian patent application published on 28 April 2006 makes known solid feed additive compositions of a complex of iron-, chrom, selenium or zinc and humic acid with honey as well as feed additive products formed from this feed additive compositions, as well as their production. The subject of the above application is a solid compound feed additive containing a given amount of complex of humic acid with iron, chrom, selenium or zinc, 40-60 mass% of honey as well as 20-50 mass% of maltodextrin, as well as the tablets and capsules made from it.

The subject of the above application furthermore is a method for producing solid feed additive compositions of a complex of iron-, chrom-, selenium- or zinc and humic acid. During this process the proper quantity of sterilized humic acid raw material is blended in water with the proper quantity of salts of iron-, or chrom-, or selenium-, or zinc, honey and maltodextrin, then at max. 60°C the water is removed. The powder-like product is made into tablets or capsules according to the known method. The solution according to the above application is a feed additive composition suitable for human consumption, it is not an animal feed additive.

The P 01 00167 Hungarian patent application published on 28 January 2003 makes known products of chrom-chelate as well as the method of production of chrom-chelate. The product is characterized by that it contains chrom-humate of 0.1-100 mass% and 99.9 - 0% known additives, preferably starch, glucose and water. During the production an alkaline-humate solution is produced by a known alkaline process from peat of humic acid content and 0.05-15 mass% $Cr^{3+}$ calculated on extract content is added in the form of inorganic chromic salt, the mixture is blended for one to three hours, then in desired case the chromic-humate is regained with the known method. The deficiency of the solution mentioned above is, that only chrome is put into the chelate-complex with humic acid from among the microelements, whereas a well-balanced nutrition of animals requires a whole range of microelements.

The Hungarian Patent applicatoin published under 42042 on 29 June 1987 makes known a method for producing humic-chelates containing humic acid and plants as well as microelements important for animals. The subject of the above application is a method for producing humic-chelates containing humic acid and micro nutritional plant elements as well as producing alkaline metal humates from substances containing humins by alkaline process, reaction of these product(s) with a micro nutritional element and recovery of monomicroelement-huminchelate solution in given case by acid treatment in solid form, in case of humic acid production recovery of alkaline metal humate by acid treatment.

The drawback of the known methods is that none of these documents depicted solutions for the decrease of drip loss, increase of oxidative stability as well as improvement of pH value, tenderness, color of meat. There are experiments only regarding additives of selenium content, but even there are no results for industrial production regarding decrease of drip loss, increase of oxidative stability as well as improvement of pH value, tenderness, color of meat.

When working out the solution according to the invention our aim was to develop and produce a feed additive mixture that is suitable for decreasing the post mortem drip loss of pork and poultry meat, that is able to increase water holding capacity and so meat products of higher quality and sense features, increasing customer satisfaction can be produced.

When working out the feed additive mixture according to the invention, our further aim was the increase of oxidative stability of pork and poultry meat and by this the lengthening of the shelf life of fresh meat.

Furthermore when working out the feed additive mixture according to the invention, we aimed to improve other nutritional values, such as pH value, tenderness, color of pork and poultry meat.

When working out the solution according to the invention we realized, that in case farm pigs and poultry are fed with such feed additive mixture, that contains microelements in a chelate-complex of humic acid, then the set aim can be achieved.

The invention is an application of a feed additive mixture for improving meat quality of pigs and poultry, preferably for decreasing the drip loss of meats after slaughtering, as well as for increasing the oxidative stability of the meats, and also for increasing the tenderness of the meats, as well as producing vivider meat color, and in the course of the said application farm pigs and poultry are fed with such feed additive mixture, that contains microelements in a chelate-complex of humic acid.

In a preferred realization of the feed additive mixture according to the invention both in case of pigs and poultry the feed additive mixture as chelate former includes 120-10,000mg/kg, preferably 3,000-4,000 mg/kg humic acid calculated on one kilogram of the ready-made feed.

In another preferred realization of the feed additive mixture according to the invention in case of pigs the feed additive mixture includes as microelement 1.5-150mg/kg, preferably 110-150 mg/kg zinc; 0.25-25 mg/kg, preferably 20-25 mg/kg copper; 7.5-750 mg/kg, preferably 80-750 mg/kg iron; 1.5-150 mg/kg, preferably 30-150 mg/kg manganese; 0.05-0.70 mg/kg preferably 0.4-0.5 mg/kg iodine; 0.01-0.50 mg/kg, preferably 0.40-0.50 mg/kg selenium and 0.02-2 mg/kg, preferably 0.10-2 mg/kg cobalt calculated on one kilogram of the ready-made feed.

In a further preferred realization of the feed additive mixture according to the invention in case of poultry the feed additive mixture includes as microelement 1.5-150mg/kg, preferably 100-150mg/kg zinc; 0.15-15mg/kg, preferably 13-15mg/kg copper; 5-500mg/kg, preferably 80-500mg/kg iron; 1.5-150mg/kg, preferably 30-150mg/kg manganese; 0.05-0.70mg/kg, preferably 0.4-0.5mg/kg iodine; 0.01-0.50mg/kg, preferably 0.40-0.50mg/kg selenium and 0.02-2mg/kg, preferably 0.10-2mg/kg cobalt calculated on one kilogram of the ready-made feed.

The feed additive mixture according to the invention is set forth through the following examples of components.

Example 1

Pig nutrition is carried out with feed of the following components calculated on one kilogram of the ready-made feed:

| | |
|---|---|
| Wheat: | 190g |
| Barley: | 200g |
| Maize: | 460g |
| Soyabean meal: | 110g |
| Calcium: | 5g |
| Feed additive mixture: | 35g |

The microelement composition of the feed additive mixture is the following, calculated also on one kilogram of the ready-made feed:

| | |
|---|---|
| Zinc: | 116.05mg |
| Copper: | 24.43mg |

(continued)

| Iron: | 88.87mg |
|---|---|
| Manganese: | 32.39mg |
| Iodine: | 0.50mg |
| Selenium: | 0.50mg |
| Cobalt: | 0.14mg |

One kilogram of the ready-made feed contains 2,086.77mg humic acid.

We use feed premix of Organomix, Vitapol, Selenopol, Cupropol, Cinkopol produced by Organit Kft. (residence: 8200 Veszprém, József Attila u. 34.) for the production of feed additive mixture.

The components of the feed should be mixed until the ready-made feed is of homogenous consistency.

The ready-made feed can be fed with any of the usual pig-feeding technology.

Example 2

Chicken feeding is carried out with feed of the following components, calculated on one kilogram of the ready-made feed:

| Wheat: | 120g |
|---|---|
| Maize: | 480g |
| Soyabean meal: | 180g |
| Hydrothermic soya: | 125g |
| Fat: | 55g |
| Feed additive mixture: | 40g |

The microelement composition of the feed additive mixture is the following, calculated also on one kilogram of the ready-made feed:

| Zinc | 103.99mg |
|---|---|
| Copper: | 14.95mg |
| Iron: | 82.25mg |
| Manganese: | 30.20mg |
| Iodine: | 0.41mg |
| Selenium: | 0.49mg |
| Cobalt: | 0.13mg |

One kilogram of the ready-made feed contains 1,771.00mg humic acid.

We use feed premix of Organomix, Vitapol, Selenopol, Cupropol, Cinkopol produced by Organit Kft. (residence: 8200 Veszprém, József Attila u. 34.) for the production of the feed additive mixture.

The components of the feed should be mixed until the ready-made feed is of homogenous consistency. The ready-made feed can be fed with any of the usual poultry-feeding technology.

**The description of experiments with pigs is the following.**

In case of a preferable concrete application of the feed additive mixture according to the invention the feed additive mixture was fed to the pigs in the fattening phase - that is from the age of 70 days till slaughtering of the pigs.

The pigs were fed with traditional nutrition up to the time of fattening, then in the fattening phase there was a difference in the composition of the feed mixture of full value between the experimental and control groups. The control group was fed during the entire fattening phase according to traditional technology, whereas the feed of the experimental group included the experimental feed additive mixture as well.

During the fattening phases the control group fed with traditional nutrition and the experimental group fed with the new feed additive mixture containing microelements in organic form were compared. All the other parameters were the same with both groups, so the differences resulting from other effects could be excluded. The experiment included 100 control and 100 fattening pigs fed with the experimental feed. The animals were fattened in 10 repetitions per group, 10 animals were included per repetition. During the planned period of the project the experiment of the above set was repeated three times.

The comparison between the traditional technology and the experimental feed containing the feed additive mixture was performed through the examination of the below mentioned parameters:

We measured, respectively calculated certain production and feed-consumption parameters of the fattening pigs: body weight gain, feed intake and feed conversion ratio.

Furthermore we monitored the extent the problems of animal health, feeding, respectively husbandry occuring during the traditional technology were reduced during the whole period of fattening resulting from the experimental feed additive mixture used.

**The description of experiments with broiler chickens is the following.**

In case of a further preferable concrete application of the feed additive mixture according to the invention the chickens were fed from the age of 14 days up to their slaughtering, in the growing and finishing phases with the feed additive mixture according to the invention.

The broiler chickens used for the experiments were ROSS 308 hybrids available on the market, used widespread due to their favorable production results.

The broiler chickens were fed with traditional feed in the first - prestarter or starter - phase. In the growing and finishing phases the composition of the feed mixture of full value was different in case of the control and experimental groups. The control group was fed according to the traditional technology henceforward, whereas the experimental group was fed with the product to be tried.

The experiment was performed in a similar way with the experiments with the pigs, control, respectively experimental groups were set up. The experiment included 10,000 animals to ensure reliability of the results in a control and in an experimental group. In a similar way with the experiments with the pigs it was necessary to make several repetitions of the experiments. Resulting from the shorter generation interval of the broiler chickens it was possible to make more repetitions, respectively more repetitions were justified, than with the pigs, so this case five repetitions were carried out.

The comparison between the traditional technology and the experimental feed containing the feed additive mixture was carried out through the examination of the below mentioned parameters:

We measured, respectively calculated certain production and feed-consumption parameters of the broiler chickens: body weight gain, feed intake and feed conversion ratio.

Furthermore we monitored the extent the problems of animal health, feeding, respectively husbandry occuring during the traditional technology were reduced during the whole period of growing and finishing phases resulting from the experimental feed additive mixture used.

Continuous record-keeping was carried out regarding veterinary treatments and mortality.

**The parameters recorded in the animal plants were the following:**

The rate of body weight gain was calculated on basis of measuring of the body weight periodically on individual animals representing the whole of the stock (minimum 10%).

Feed consumption was calculated on basis of the quantity dispensed for the single experimental groups.

Feed conversion ratio was calculated on basis of the quantity of the nutrition fed and the increase of body-weight during the same period.

The number of veterinary treatments and their nature was recorded on basis of the veterinary treatment journal.

The mortality was recorded daily and it was calculated on basis of the number of bodies settled and those transported to the slaughterhouse.

**The parameters measured at the slaughterhouse sample-taking were the following:**

The pH value was measured every time in case of broiler chickens in the breast, in case of pork in leg and loin with the help of a meat industry electrical pH tester provided with a pH-STAR stabbing electrode. Checking of pH value took place at the generally accepted time, in the 45th minute after slaughtering, respectively after chilling in the 24th

hour after slaughtering. Every case one measurement was made per muscle.

The color of the fresh cutted meat was checked by a reflectance spectometric method with a Minolta CR 410 equipment in L*, a*, b* color system in the 24th hour following the slaughtering. The value L* shows the lightness of the meat (0=black; 99=white). The value a* shows the redness of the meat (red in + direction, green in - direction), whereas the value b* shows the yellowness of the meat (yellow in + direction, blue in - direction).

For the evaluation of the color of the meat from consumers' point of view the $\Delta E^*_{ab}$ value should be determined on basis of the values received in L*, a*, b* color system as follows:

$$\Delta E^*_{ab} = \sqrt{(\Delta L^*)^2 + (\Delta a^*)^{2+}(\Delta b^*)^2}.$$

Using this formula the differences between the values received in certain groups can be compared, respectively from the point of view of visual perception they can be evaluated.

Connection of visual perception and $\Delta E^*_{ab}$ color difference (Lukács, 1982)

| $\Delta E^*_{ab}$ | Difference with visual perception |
|---|---|
| $\Delta E^*_{ab} \leq 0,5$ | Not perceptible |
| $0,5 < \Delta E^*_{ab} \leq 1,5$ | Imperceptible |
| $1,5 < \Delta E^*_{ab} \leq 3,0$ | Perceptible |
| $3,0 < \Delta E^*_{ab} \leq 6,0$ | Visible/apparent |
| $6,0 < \Delta E^*_{ab}$ | Big |

The water holding capacity of the meat, that is the drip loss was determined by the modified Honikel test. (Honikel, 1987).

An appr. 100g of meat sample was taken in the 24th hour following the slaughtering to determine the drip loss. The samples were measured, the results recorded. The samples were hung with the help of a string in such a way, that drips occur only due to gravitation, no other pressure could influence the result. The samples were stored this way for 24 hours at 4°C, then weighed again. The drip loss was calculated from the difference of the data measured according to the following formula:

$$\text{Drip loss (\%)} = \frac{\text{Weight of slice} - \text{weight of slice after 24 hours}}{\text{Weight of slice}} * 100$$

**The parameters measured in the laboratory were the following:**

In order to determine the shear force (tenderness) a sample of appr 2.5 cm thickness was taken in the 24th hour following the slaughtering. Having wrapped the samples into vacuumfoil they were stored at -20°C until the analyzis. The samples were thawed slowly under the same conditions (12-18 hours, 4°C), then after defrosting the slices were fried in a contact griller up to 72°C core temperature. After frying the slices were chilled down to room temperature.

During the frying test we could determine the rate of cooking and chilling loss by measuring the weight loss during frying.

We took cylindrical cores of 1.25cm diameter from pork loin slices with the help of a device developed for this purpose parallel with the running of fibres. We took minimum five cores from each slice, the cores were cut across once, then the average of the shear force value of these provided the average shear force value of the slice.

In case of breast meat of broiler chickens after frying up to 72°C core temperature prism of 1cm² base were cut keeping cranial-caudal (head-rump) running down, then the samples were cut at one cm, then the average of the shear force of these provided the average shear force of the slice. The tests were made with a TA.XT Plus equipment attached with a Warner-Bratzler blade (60° angle, one mm thickness, 250 mm/minute).

During the tests the important nutritional value parameters of the meat samples - breast of broiler chicken and pork loin - were determined as well. For these tests the samples were taken in the 24th hour after slaughtering, then they were stored at -20°C till the analyzis.

The moisture content of the meat samples was determined on basis of Hungarian Standard (MSZ ISO 1442) "Meat and meat products. Determination of moisture content". During the test the samples were ground and mixed with heated quartzsand they were dried in drying oven for two hours at 103°C. The moisture content of the sample was expressed in the rate of the mass of the dried and wet samples.

The fat content of the meat samples was determined on basis of Hungarian Standard (MSZ ISO 1443) "Meat and meat products. Determination of total fat content". The determination was carried out with petroleum ether extraction. During the process the samples were ground and extracted for four hours in Soxhlet equipment. The extracting flask was dried back in the oven. The extracted fat content was determined from the mass of the fat after back extraction calculated on the fresh sample.

The protein content of the meat samples was determined on basis of Hungarian Standard (MSZ 5874/8-78) "Testing methods of meat products. Determination of protein content." The protein content of the samples was determined on basis of the nitrogen content with Kjeldahl decomposition method. The decomposition was carried out on the appropriately prepared and homogenized sample with hydrogen peroxide as oxidizing agent, potassium sulphate as riser of boiling point as well as in presence of cupric(II)sulphate catalyst using sulphuric acid for boiling. The ammonia fixed in ionic form was freed with alkali, absorbed in boric acid, then titrated back, so we received the nitrogen content. The protein content was calculated from this result.

Determination of the ash content of the meat samples was carried out on basis of Hungarian Standard (MSZ ISO 936) "Meat and meat products. Determination of total ash content". The homogenized sample was dried out, carbonized, then incinerated in a heating furnace at 550°C. The total ash content was calculated from the rate of the mass of the residue after incineration and that of the fresh sample.

The determination of the oxidative stability of meat took place with lipidperoxid process induced by iron ($Fe^{3+}$) (Huang and Miller, 1993). After the preparation of the samples - homogenization and adding phosphate buffer of iron content - they were kept in a water bath of 37°C for 15, 30, 45 and 60 minutes. The lipidperoxid reaction was stopped by acidification (cold 20% acetic acid) and adding an anti-oxidant (BHT).

Determination of the metastable end-product of the lipidperoxidation process, the malondialdehyde took place with 2-thiobarbituricacid reaction for 60 minutes in a water bath of 90°C. The malondialdehyde-thiobarbituricacid complex was shaken to n-butyl alcohol and absorbance of the butyl alcohol phase was measured by a spectrophotometer. (Mihara et al, 1980).

During the tests the examination of certain significant lipidperoxidation and antioxidation parameters in the plasma, in red bloodcell-hemolizate and in liver-homogenizate.

The lipid peroxide state of the blood (plasma and red blood cell hemolizate of 1:9) and of the liver were examined by measuring the malondialdehyde content in the blood, (Placer et al. 1966) whereas in the liver homogenizate it was done according to the method of Mihara et al. (1980).

Evaluation of the anti-oxidant state took place partly by examining the activity, respectively the quantity of certain members of glutation redox. The reduced glutation content was measured in the plasma, in the red blood cell hemolizate and in the 10,000 supernatant fraction of the liver homogenizate 1:9. (Sedlak and Lindsay, 1968).

The activity of the glutation-peroxidaze (E.C. 1.11.1.9) was measured in the plasma, in the red blood cell hemolizate and in the 10,000 supernatant fraction of the liver homogenizate 1:9 (Matkovics et al., 1988). The enzyme activity was referred to the protein content of the test sample, which was measured in case of the plasma and red blood cell hemolizate with biuret reaction (Weichselbaum, 1948), whereas in the tissue homogenizate it was measured by Folin-phenol reagent (Lowry et al., 1951).

From among other antioxidants the uric acid concentration in the plasma was measured with well-established methods available in commerce (Diagnosticum Rt., Budapest).

Determination of aspartate-amino-transpheraze (AST) in the plasma took place with a spectrophotometer with well-established methods available in commerce (Diagnosticum Rt., Budapest). The test is based on the principle, that in the reaction catalyzed by AST two substrata take part, L-aspartate and oxoglutarate. The auxiliary enzyme malatedehydrogenaze (MDH) in the reagent promotes the transformation of oxalacetate produced in the first reaction with the help of NADH coenzyme. The NADH-$NAD^+$ oxydation-reduction process is accompanied by an absorbance reduction measured at 340nm (Bergmeyer et al., 1978).

Determination of alanin-aminotransferaze (ALT) in plasma also took place with a spectrophotometer with well-established methods available in commerce (Diagnosticum Rt., Budapest). The principle of the test is, that in case of optimal reaction ALT acts as a catalyst for the two substrata - L-alanin and 2-oxoglutarate. Piruvat developing in the reaction - the NADH-$NAD^+$ oxydation-reduction process is accompanied by an absorbtion reduction measured at 340 nm (Bergmeyer et al., 1978).

Determination of lactate-dehydrogenaze (LDH) activity in the plasma was measured with a spectrophotometer with well-established methods available in commerce (Diagnosticum Rt., Budapest). The principle of the test is, that LDH enzyme catalyzes the transformation of piruvat into lactate in a pH=7.5 buffer in the presence of NaCl and NADH.

The transformation of NADH to NAD$^+$ form is accompanied by an absorbance reduction measurable at 340nm. The change of absorbance is proportionate with the lactic acid-dehydrogenaze activity of the serum. (Howell et al., 1979)

The results of the tests were evaluated with mathematical statistical methods. In case of every test the mathematical average and standard deviation (S.D) value of the results of samples taken in certain times were taken into consideration within the experimental groups, in case of certain tested parameters.

In case of certain parameters statistical evaluation of the mathematical average provided the results of the tests. We used Duncan's multiple range test for determining the significance levels due to the fact that the values were not of normal distribution and occasionally there was difference in the number of samples.

We used MS Excel 7.0 respectively Statistica 4.0 softwares for the statistical calculations.

Results received in the course of experiments with the feed additive mixture according to the invention are furthermore set forth by the enclosed figures.

The Figure 1 shows the change of pH value of pork loin.

The Figure 2 shows the drip loss in pork loin.

The Figure 3 shows the rate of loss from cooking and chilling in loin samples.

The Figure 4 shows the Warner-Bratzler shear force value in loin samples.

The Figure 5 shows the oxidative stability of loin samples.

The Figure 6 shows the malondialdehyde content in the blood and liver of pigs.

The Figure 7 shows the change of reduced glutation content and glutation peroxidaze activity of pigs.

The Figure 8 shows the change of the pH value in the breast meat samples of broiler chickens.

The Figure 9 shows the rate of drip loss in the breast meat samples of broiler chickens. The Figure 10 shows the Warner-Bratzler shear force value in the breast meat samples of broiler chickens.

The Figure 11 shows the oxidative stability of the breast meat samples of broiler chickens.

The Figure 12 shows the malondialdehyde content in the blood and liver of broiler chickens.

The Figure 13 shows the change of the reduced glutation content of broiler chickens.

The Figure 14 shows the change of glutation-peroxidaze activity of broiler chickens.

The Figure 15 shows the uric acid content of the plasma of broiler chickens.

**Results of the experiments with pigs**

Slaughtering of pigs took place at Albertirsa (slaughterhouse No.1) and at Csévharaszti (slaughterhouse No. 2). At Csévharaszti we could not measure every parameter, had no possibility of every sample-taking resulting from technical deficiency, so in case of the certain parameters it is separately indicated if they reflect the values measured in both slaughterhouses, respectively if they show the values from slaughterhouse No.1 only.

In case of experiments with pigs there was no difference between the two groups in body weight gain, furthermore the site treatments and mortality did not show different results due to the use of the experimental feed additive mixture. The veterinary doctors' observations did not show any difference either.

Meat quality parameters

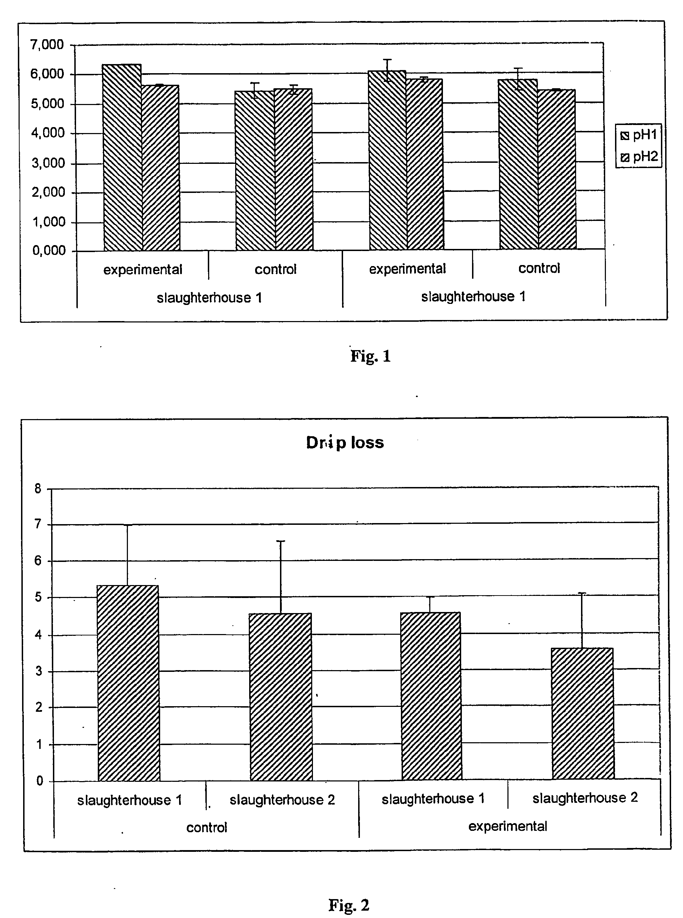

Change of the pH value in pork loin can be seen in Figure 1, where the different columns are showing the experimental and control datas of the different slaughterhouses, and the length of each columns shows the pH values. It can be seen from the results that with the application of the experimental feed additive mixture the pH value of the meat was higher than those of the control group both in 45$^{th}$ minute after slaughtering and after the pre-chilling of 24 hours. This trend was shown in both slaughterhouses.

The test regarding the color of pork loin by reflection spectrometric method showed, that in case of the experimental groups in both slaughterhouses the meat had a darker shade (L*), the redness (a*) and yellowness (b*) was more intense at the animals slaughtered at slaughterhouse No.1, whereas they were more moderate in case of animals slaughtered at slaughterhouse No.2 (Table 1). From the point of view of sensory perception the values show that the pork loin samples fell into the 'perceptible' (1.50-3.00) category in case of both slaughterhouses. (Slaughterhouse No. 1: 1.88; Slaughterhouse No.2: 2.78)

Table 1: Color of pork loin (average $\pm$ S.D.)

|  |  | L* | A* | b* |
|---|---|---|---|---|
| Slaughterhou se No.1 | ExperiMental | 53.921 | 16.394 | 9.617 |
|  |  | 0.048 | 1.239 | 0.163 |
|  | Control | 54.884 | 15.383 | 8.364 |
|  |  | 4.085 | 0.604 | 1.111 |
| Slaughterhou se No.2 | ExperiMental | 52.699 | 18.279 | 12.249 |
|  |  | 3.362 | 1.345 | 1.718 |
|  | Control | 53.489 | 18.479 | 14.911 |
|  |  | 1.859 | 0.915 | 1.528 |

The drip loss in pork loin can be seen in Figure 2, where the different columns are showing the experimental and control datas of the different slaughterhouses, and the length of each columns shows the drip loss, in percent. The rate of drip loss was lower at both slaughterhouses in case of the pigs fed with the nutrition including the feed additive mixture, than in the control group.

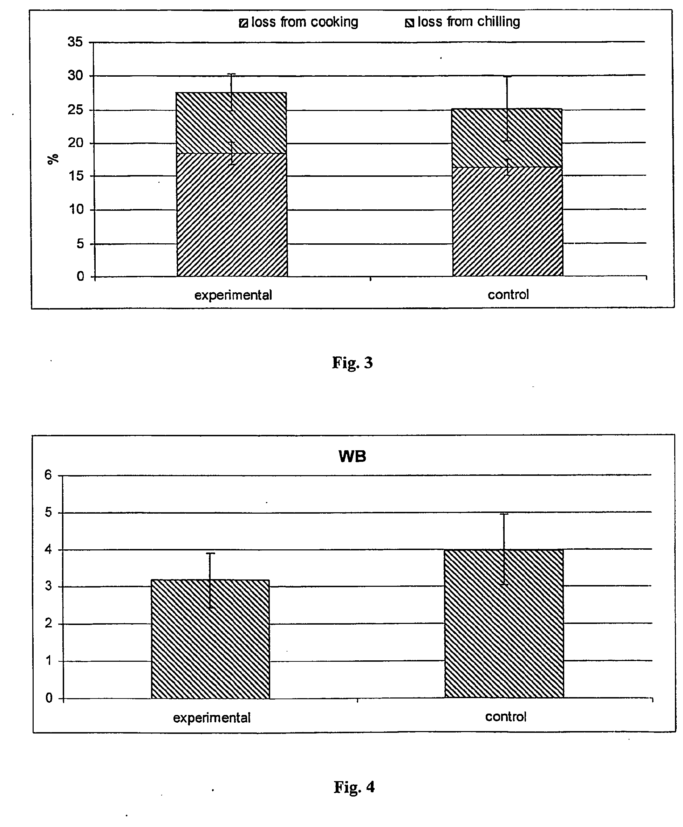

The rate of loss from cooking and chilling in loin samples can be seen in Figure 3, where the different columns are showing the experimental and control datas, and the length of each columns shows the loss from frying and loss from chilling, in percent. The rate of loss from cooking and chilling, determined from the loin samples from the slaughterhouse No.1 was bigger interestingly enough in case of pigs fed with the experimental feed additive mixture, albeit the rate of drip loss was lower.

This loss is presumably due to the difference between the muscle structure and fat content of the loin, as the shear force value of the Warner-Bratzler test was better, that is the meat of animals fed with the experimental feed was more tender. The shear force by Warner-Bratzler in loin samples can be seen in Figure 4, where the different columns are showing the experimental and control datas, and the length of each columns shows the shear force by Warner-Bratzler, in kg.

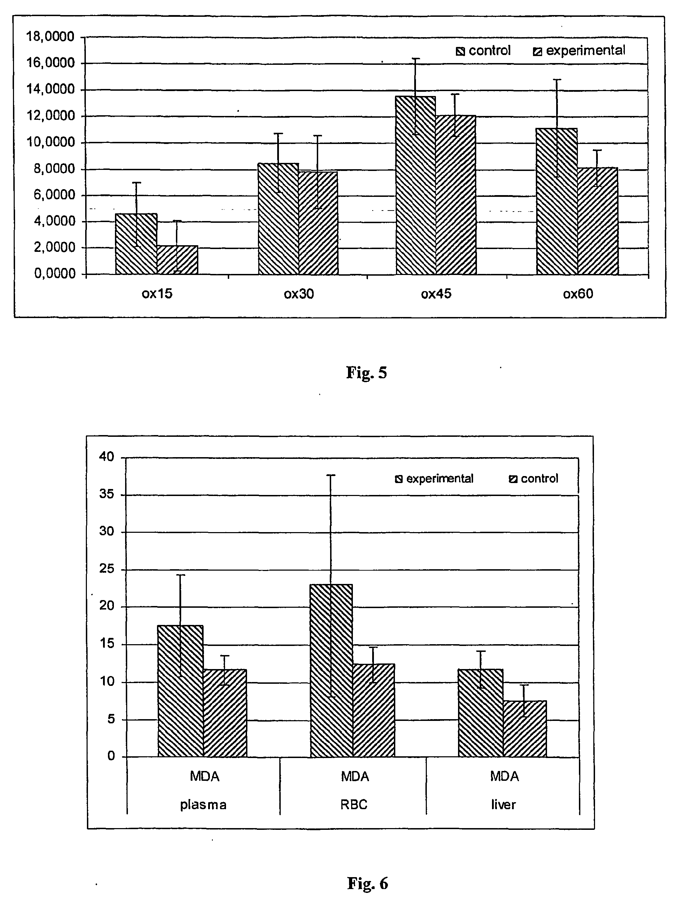

The oxidative stability of loin samples can be seen in Figure 5, where the different columns are showing the experimental and control datas in different times, and the length of each columns shows the malondialdehyde content, in $\mu$mol/g. The oxidative stability of meat samples was also better in case of pigs fed with the experimental feed as till the 30th minute of incubation the malondialdehyde content of the experimental group was considerably below the values of the control group. The decrease between the 45th and 60th minute resulted from the fact, that after the peroxidation of the unsaturated fatty acids in the meat samples no malondialdehyde can be produced, even the molecules malondialdehyde arisen earlier are partially changed, respectively forming of complexes and polymerization start this way decreasing the absolute malondialdehyde concentration of the reaction.

The nutritional values of loin samples are shown in Table 2. The values show, that the extract content of the meat samples from the experimental group was moderately lower, than that of the control group, which can be explained by the lower drip loss, the fat content was moderately bigger, but at the same time the protein and ash contents were lower as well.

Table 2: Nutritional values of loin samples (average $\pm$ S. D.)

|  | Extract content % | Raw protein % | Fat % | Ash % |
|---|---|---|---|---|
| Control | 71,22$\pm$1.05 | 24.07$\pm$0.52 | 3.47$\pm$0.89 | 1.20$\pm$0.02 |
| Experimental | 70.98$\pm$1.36 | 23.32$\pm$0.64 | 3.51$\pm$0.76 | 1.20$\pm$0.02 |

Biochemical parameters

The malondialdehyde content in the blood and liver of pigs can be seen in Figure 6, where the different columns are showing the experimental and control datas of plasma, red blood cell and liver, and the length of each columns shows the malondialdehyde content, in $\mu$mol/l, and mmol/g. The results of the examination of lipidperoxidation and antioxidant parameters showed, that resulting from the feed of the experimental feed additive mixture increased intensity processes took place in the blood (plasma and red blood cell hemolizate) as well as in the liver lipidperoxidation processes shown by the bigger malondialdehyde content. This result is especially interesting, because at the same time the oxidative stability of the meat sample in the experimental group was better. It indicates however, that the more intense lipidperoxidation processes present in certain tissues are not equally present, and the muscle can indicate even opposite direction changes, than the blood or the liver.

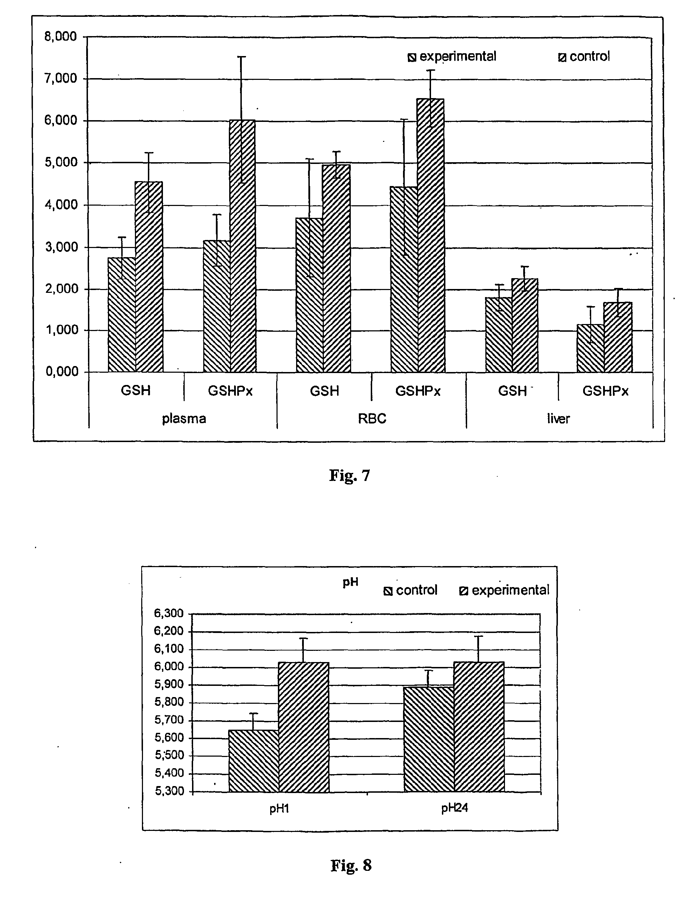

Change of reduced glutation content and glutation peroxidaze activity of pigs can be seen in Figure 7, where the different columns are showing the experimental and control datas of plasma, red blood cell and liver, and the length of each columns shows the change of reduced glutation content (GSH) and the glutation-peroxidaze (GSHPx) activity, in mmol/l, mmol/g, and E/g protein content. The state of the glutation redox system shows as well more intense lipidperoxidation processes, as both the reduced glutation content (GSH) and the glutation-peroxidaze (GSHPx) activity was lower in the experimental groups, than in the control groups. Here the underlying cause is, that resulting from the more intense lipidperoxidation processes the exhaustion of glutation redox system must be reckoned with.

The increased intensity lipidperoxidation processes in the liver did not result in significant liver damage. The activity of the enzymes in the plasma indicating the integrity of liver cells was extremely low in every sample, and except for the LDH activity there was no significant change compared with the control group. (Table 3), even in this case it was lower in the experimental group too.

Table 3: Change of the enzimes' activity indicating the damage of liver cells in the plasma (average $\pm$ S.D.)

| Group | LDH U/l | ALT U/l | AST U/l |
|---|---|---|---|
| Experimental | 0.24$\pm$0.10 | 1.19$\pm$0.13 | 1.19$\pm$0.16 |
| Control | 0.93$\pm$0.32 | 1.10$\pm$0.15 | 0.98$\pm$0.13 |

**Experimental results with broiler chickens**

During the tests with broiler chickens samples representing the experimental stocks were taken in the slaughterhouse with the following results.

In case of the experiments with the broiler chickens there was no difference in body weight gain between the two groups, furthermore the treatments on site and the mortality did not change either due to the use of the experimental feed. Observations of the veterinary doctors did not show any variance either.

Meat quality parameters

Change of the pH value of the breast meat samples can be seen in Figure 8, where the different columns are showing the experimental and control datas in different times, and the length of each columns shows the change of the pH value of the breast meat. It can be seen from the results, that when using the experimental feed additive mixture the pH value of the meat was higher both in the 45th minute after the slaughtering and after the 24-hours pre-chilling than those of the control groups'. This trend was the same in case of both slaughterhouses. In case of the poultry meat contrary to the pork meat, the pH value did not decrease after the storing of 24 hours at +4°C but slightly increased, which can be explained with the different biochemical parameters of the muscles of the meat.

The test of the color of the breast meat by a reflectance spectrometrical method showed, that the breast meat from the birds fed with the experimental feed additive mixture was darker shade (L*), a lighter shade of red (a*), and a lighter shade of yellow (b*) (Table 4). From the point of view of sensory perception the $\Delta E^*_{(ab)}$ values show that the difference between the breast meat from the experimental and control animals fell into the 'big' ($\Delta E^*_{(ab)}$>6.00) category, (average 9.80).

Table 4: Color of the breast meat (average $\pm$ S.D.)

| | L* | a* | b* |
|---|---|---|---|
| Control | 57.56$\pm$2.53 | 13.30$\pm$1.07 | 12.34$\pm$1.88 |
| Experimental | 49.36$\pm$2.85 | 10.47$\pm$1.07 | 7.79$\pm$0.98 |

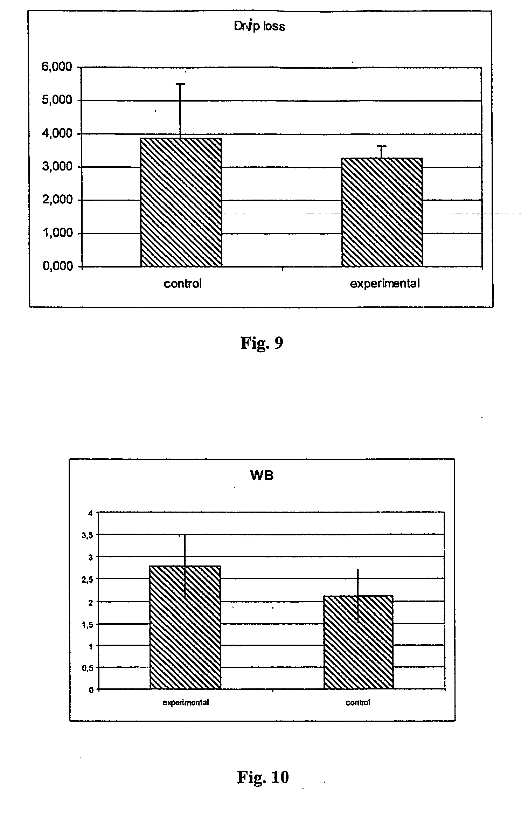

Rate of drip loss in the breast meat samples of broiler chickens can be seen in Figure 9, where the different columns are showing the experimental and control datas, and the length of each columns shows rate of drip loss in the breast meat samples, in percent. The rate of the drip loss in the breast meat was considerably lower (-15.03%) in the experimental group fed with the experimental feed additive mixture, than in the control group.

The rate of cooking and chilling loss in case of the broiler chicken breast meat was basically identical between the experimental group and the control group, and the rate of decrease was so low, that those data are not shown.

Value of Warner-Bratzler shear force in the breast meat samples of broiler chickens can be seen in Figure 10, where the different columns are showing the experimental and control datas, and the length of each columns shows the shear force by Warner-Bratzler, in kg. The value of the Warner-Bratzler shear force, that is the rate of tenderness increased moderately, somewhat unfavorably, in the breast meat samples from the animals fed with the experimental feed additive mixture, which is quite startling, considering the much lower drip loss. The underlying cause of this result may be that the rate of shear force is influenced not only by the number and diameter of the muscle fibres but also by the fat content of the meat sample, as we experienced the same phenomenon in case of pork loin samples. The fat content is extremely low in poultry breast meat.

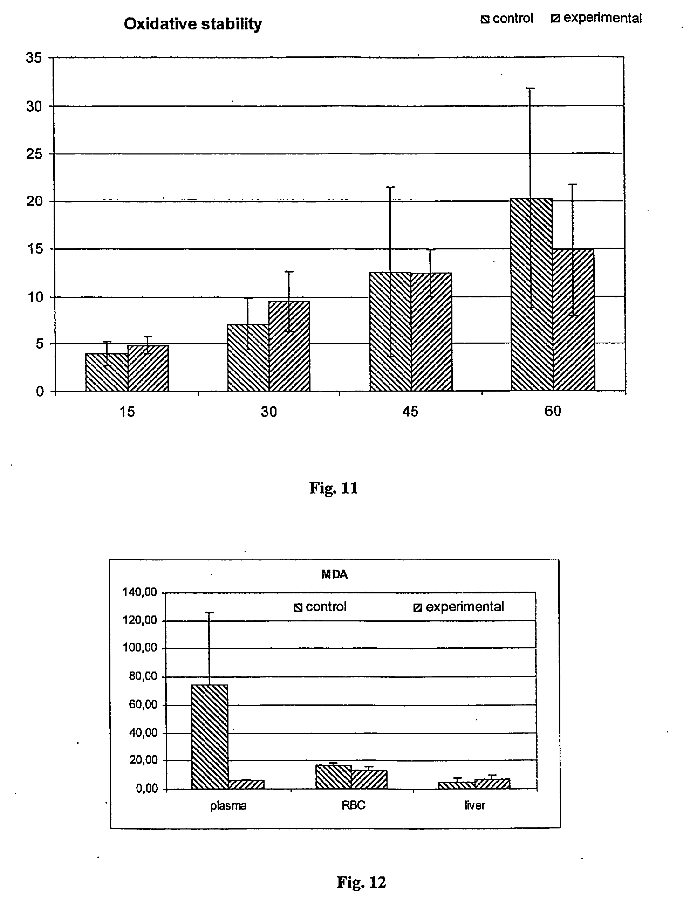

Oxidative stability of the breast meat samples of broiler chickens can be seen in Figure 11, where the different columns are showing the experimental and control datas in different times, and the length of each columns shows the malondialdehyde content, in $\mu$mol/g. The oxidative stability of the samples of broiler chickens fed with the experimental feed additive mixture was all in all favourable, as we found, that though till the 45th minute of incubation the malondialdehyde content was higher in case of the experimental group, afterwards however it increased by a much lesser extent than in the samples of the control birds. This difference is due to the fact, that in case of poultry meat malondialdehyde is continuously produced during the whole period of incubation, but while the antioxidant defense is exhausted in the breast meat from the control group by the 45th minute of the incubation, in the samples from the birds fed with the experimental feed additive mixture the defense still exists and active even in the 60th minute.

The nutritional values of the breast meat are shown in Table 5. The results show, that the extract content of the meat samples from the experimental groups was moderately lower, but the raw protein content was higher, which can be explained by the lower drip loss, respectively resulting from this by the lower protein loss, and the fat and ash content was very moderately lower as well.

*Table 5: Nutritional values of the breast meat samples (average $\pm$ S.D.)*

|  | Extract content % | Raw protein % | Fat % | Ash |
|---|---|---|---|---|
| Control | 72.47$\pm$1.10 | 23.40$\pm$1.62 | 0.71$\pm$0.23 | 1.25$\pm$0.18 |
| Experimental | 71.95$\pm$1.30 | 24.50$\pm$1.80 | 0.70$\pm$0.25 | 1.23$\pm$0.11 |

Biochemical parameters

The malondialdehyde content in the blood and liver of broiler chickens can be seen in Figure 12, where the different columns are showing the experimental and control datas of plasma, red blood cell and liver, and the length of each columns shows the malondialdehyde content, in $\mu$mol/l, and mmol/g. The results of the tests of the lipidperoxidation parameter and malondialdehyde content showed, that resulting from the feed of the experimental feed additive mixture the lipidperoxidation processes were at a considerably lower level in the blood (plasma and red blood cell hemolizate), whereas in case of the liver they were moderately bigger resulting from the experimental feed additive mixture. This result allows to make an interesting comparison, as in case of the pig the lipidperoxidation processes showed a more intense level not only in the liver, but also in the blood as a result of the experimental feed additive mixture, whereas in case of the poultry it was not so intense. The underlying cause of this might be the differently compiled, specific feed additive mixture, as well as the different metabolism of certain animal species.

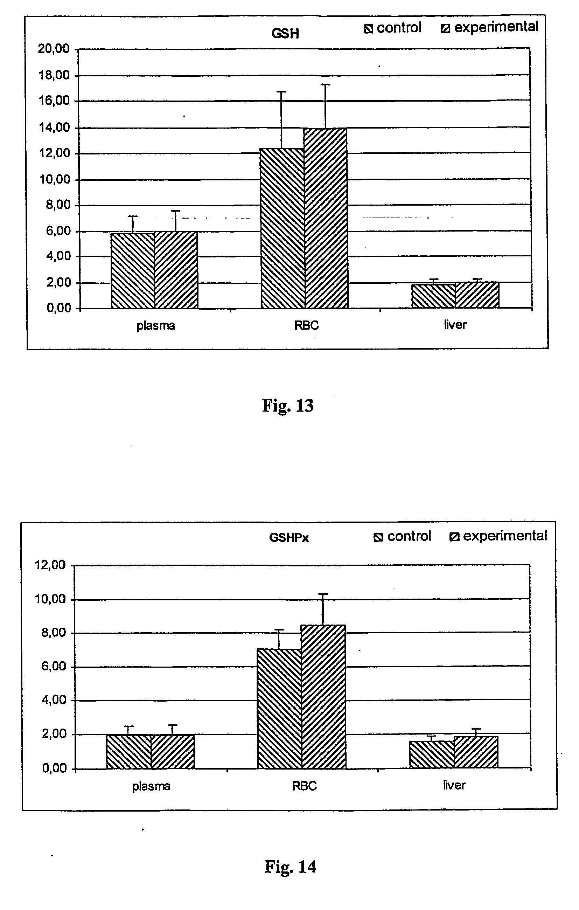

Change of the reduced glutation content of broiler chickens can be seen in Figure 13, where the different columns are showing the experimental and control datas of plasma, red blood cell and liver, and the length of each columns shows the change of reduced glutation content (GSH), in mmol/l and mmol/g.

Change of glutation-peroxidaze activity of broiler chickens can be seen in Figure 14, where the different columns are showing the experimental and control datas of plasma, red blood cell and liver, and the length of each columns shows the change of the glutation-peroxidaze (GSHPx) activity, in E/g protein content.

The fact, that the values of the parameters of the tested biological antioxidant defence system: the reduced glutation (GSH) content and the glutation-peroxidaze (GSHPx) activity were moderately bigger with the birds consuming the experimental feed additive mixture, than with the control group, might result from the reduced intensity of the lipidperoxidation processes. It is due to the fact, that the less intense lipidperoxidation processes burdened the glutation redox system of the body to a lesser extent.

From among other antioxidant compounds in case of birds the uric acid content of the plasma is significant as well, which shows the process of protein decomposition in the organism.

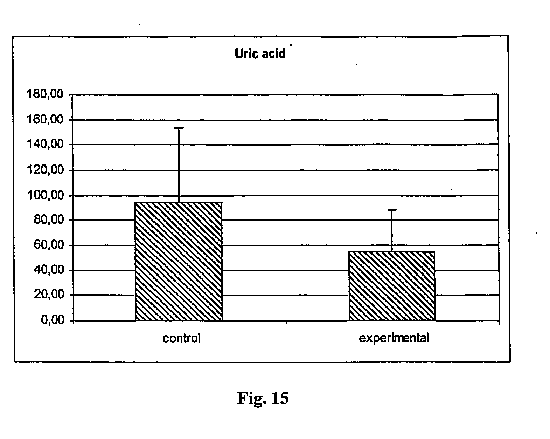

Uric acid content of the plasma of broiler chickens can be seen in Figure 15, where the different columns are showing the experimental and control datas, and the length of each columns shows the uric acid content of the plasma, in mmol/l. Our results demonstrate, that the uric acid concentration in the plasma of the broiler chickens in the control group fed with traditional feed was considerably higher which can be interpreted on the one hand partly by the response reaction to the more intense lipidperoxidation processes, on the other hand it relegates to the increased protein decomposition processes taking place in the organism.

The activity of enzymes, showing the integrity of liver cells, tested in the plasma was low in every case, and in case of the samples from the experimental group the values did not show considerable deviation from the activity values of the control group (Table 6). It demonstrates the fact, that the liver cells keep their integrity even if fed with the experimental feed additive mixture.

Table 6: Change of the activity of the enzymes indicating the damage of liver cells in the plasma (average ± S.D.)

| Control | ALT | LDH | AST |
|---|---|---|---|
| Average | 1.1043 | 0.94585 | 0.9889 |
| S.D. | 0.06979 | 0.267842 | 0.136196 |

| Experimental | ALT | LDH | AST |
|---|---|---|---|
| Average | 1.203825 | 1.0593 | 0.9811 |
| S.D. | 0.040163 | 0.125685 | 0.343906 |

Resulting from the results of the invention it is possible to formulate a species-specific feed additive mixture, which makes possible improving a significant parameter of the quality of pork and poultry meat, i. e. the extent of drip loss can be reduced.

Besides having achieved the primary aim, the reduction of the extent of the drip loss, on basis of our results we managed to improve other parameters of meat quality as well, the oxidative stability, i. e. lengthening of the shelf life of meat as well as the eating quality.

On basis of the results of the biochemical tests regarding the lipidperoxide and antioxidant states of animal organism, as well as surveying the integrity of the liver, it can be said, that though in case of pigs the experimental feed additive mixture resulted in increased lipidperoxidation processes, but it did not have significant affect on the integrity of the liver cells, i. e. the organism was able to efficiently compensate the effects. In case of poultry the changes were contrary to the above, among which the decrease of the uric acid content in the plasma resulting from the developed feed additive mixture should be highlighted which results not only in the decreased burden of the antioxidant system, but also the decreased decomposition of protein, consequently to a moderate extent, the infiltration of protein increases as well.

The advantage of the feed additive mixture according to the invention is, that the post mortem drip loss of pork and poultry meat can be considerably decreased, which is favourable for both the consumers and the meat processors. The pork and poultry meat having bigger water holding capacity can better satisfy consumer demand, as the loss is considerably reduced during the preparation of food, this way the price/value rate of the meat product is improved. The advantage for the meat processors is, that the processability of the fresh meat produced with the application of the feed additive mixture according to the invention is considerably improved, as low water holding capacity does not limit the range of goods to be produced, but the possibility of producing meat products of great added value can be increased.

A further advantage of the feed additive mixture according to the invention is, that the oxidative stability is increased, as well as the shell life is lengthened of the pigs and poultry fed with this feed additive mixture.

A further advantage of the feed additive mixture according to the invention is, that resulting from its use the pH value of the pork and poultry meat changes in a favourable direction.

A further advantage of the feed additive mixture according to the invention is, that it results in more tender pork and poultry meat.

A further advantage of the feed additive mixture according to the invention is a vivider, more intense meat color.

A further advantage of the feed additive mixture according to the invention is, that the industrial production can contribute to the decrease of environmental hazards, as resulting from its application the liquid waste burdening the environment is decreased in the slaughterhouses.

**Claims**

1.  Use of a feed additive mixture for improving meat quality of pigs and poultry, preferably for decreasing the drip loss of meats after slaughtering, as well as for increasing the oxidative stability of the meats, and also for increasing the tenderness of the meats, as well as producing vivider meat color, and in the course of the said application farm pigs and poultry are fed with such feed additive mixture, that contains microelements in a chelate-complex of humic acid.

2.  Use according to claim 1, **characterized by** that, both in case of pigs and poultry the feed additive mixture as chelate former includes 120-10,000mg/kg, preferably 3,000-4,000 mg/kg humic acid calculated on one kilogram of the ready-made feed.

3.  Use according to claim 1 or 2, **characterized by** that, in case of pigs the feed additive mixture includes as microelement 1.5-150mg/kg, preferably 110-150 mg/kg zinc; 0.25-25 mg/kg, preferably 20-25 mg/kg copper; 7.5-750 mg/kg, preferably 80-750 mg/kg iron; 1.5-150 mg/kg, preferably 30-150 mg/kg manganese; 0.05-0.70 mg/kg preferably 0.4-0.5 mg/kg iodine; 0.01-0.50 mg/kg, preferably 0.40-0.50 mg/kg selenium and 0.02-2 mg/kg, preferably 0.10-2 mg/kg cobalt calculated on one kilogram of the ready-made feed.

4.  Use according to claim 1 or 2, **characterized by** that, in case of poultry the feed additive mixture includes as microelement 1.5-150mg/kg, preferably 100-150mg/kg zinc; 0.15-15mg/kg, preferably 13-15mg/kg copper; 5-500mg/kg, preferably 80-500mg/kg iron; 1.5-150mg/kg, preferably 30-150mg/kg manganese; 0.05-0.70mg/kg, preferably 0.4-0.5mg/kg iodine; 0.01-0.50mg/kg, preferably 0.40-0.50mg/kg selenium and 0.02-2mg/kg, preferably 0.10-2mg/kg cobalt calculated on one kilogram of the ready-made feed.

**Patentansprüche**

1.  Anwendung einer Futtermittelzusatzstoffmischung für die Verbesserung der Fleischqualität von Schweinen und Geflügel, vorteilhäftig für die Verminderung des Tropfensverlustes des Fleisches nach Schlachtung und für die Erhöhung der Oxydativstabilität des Fleisches, für die Mürbserhöhung des Fleisches und für die Erreichung einer besseren Fleischfarbe, und im Laufe dieser Anwendung werden Schweine und Geflügel mit einer Futtermittelzusatzstoffmischung gefüttert, die Mikroelemente im Chelatkomplex enthält.

2.  Anwendung nach Anspruch 1, **dadurch gekennzeichnet, dass** bei Schweinen und auch bei Geflügel die Futtermittelzusatzstoffmischung 120-10000mg/kg, vorteilhäftig 3000-4000mg/kg Huminsäre als Chelatbilder bezogen auf ein Kilogramm des fertigen Futtermittels enthält.

3.  Anwendung nach Anspruch 1 oder 2, **dadurch gekennzeichnet, dass** bei Schweinen die Futtermittelzusatzstoffmischung 1,5-150 mg/kg, vorteilhäftig 110-150 mg/kg Zink; 0,25-25 mg/kg, vorteilhäftig 20-25 mg/kg Kupfer; 7,5-750 mg/kg, vorteilhäftig 80-750 mg/kg Eisen; 1,5-150 mg/kg, vorteilhäftig 30-150 mg/kg Mangan; 0,05-0,70 mg/kg, vorteilhäftig 0,4-0,5 mg/kg Jod; 0,01-0,50 mg/kg, vorteilhäftig 0,40-0,50 mg/kg Selen und 0,02-2 mg/kg, vorteilhäftig 0,10-2 mg/kg Kobalt bezogen auf ein Kilogramm des fertigen Futtermittels enthält.

4.  Anwendung nach Anspruch 1 oder 2, **dadurch gekennzeichnet, dass** bei Geflügel die Futtermittelzusatzstoffmischung 1,5-150 mg/kg, vorteilhäftig 100-150 mg/kg Zink; 0,15-15 mg/kg, vorteilhäftig 13-15 mg/kg Kupfer; 5-500 mg/kg, vorteilhäftig 80-500 mg/kg Eisen; 1,5-150 mg/kg, vorteilhäftig 30-150 mg/kg Mangan; 0,05-0,70 mg/kg, vorteilhäftig 0,4-0,5 mg/kg Jod; 0,01-0,50 mg/kg, vorteilhäftig 0,40-0,50 mg/kg Selen und 0,02-2 mg/kg, vorteilhäftig 0,10-2 mg/kg Kobalt bezogen auf ein Kilogramm des fertigen Futtermittels enthält.

**Revendications**

1.  Utilisation d'un mélange d'additif alimentaire permettant d'améliorer la qualité de la viande de porc et de volaille, préférablement de diminuer la perte de goutte de la viande après abat, d'augmenter la stabilité oxidative de la viande, d'augmenter la tandresse de la viande et aussi de former un couleur de viande plus avantageux, et au cours de cette utilisation les porcs et les volailles sont affouragés avec un mélange d'additif alimentaire qui contient microéléments dans un complexe de chélate d'acid humique.

2.  Utilisation selon la revendication 1, charactérisé en ce que, dans le cas de porc et aussi de volaille le mélange d'additif alimentaire contient 120-10000mg/kg, préférablement 3000-4000mg/kg d'acid humique comme chélate formant à un kilogramme de fourrage prêt.

3. Utilisation selon la revendication 1 ou 2, charactérisé en ce que, dans le cas de porc le mélange d'additif alimentaire contient 1,5-150 mg/kg, préférablement 110-150 mg/kg de zinc; 0,25-25 mg/kg, préférablement 20-25 mg/kg de cuivre; 7,5-750 mg/kg, préférablement 80-750 mg/kg de fer; 1,5-150 mg/kg, préférablement 30-150 mg/kg de manganèse; 0,05-0,70 mg/kg, préférablement 0,4-0,5 mg/kg de iode; 0,01-0,50 mg/kg, préférablement 0,40-0,50 mg/kg de sélénium et 0,02-2 mg/kg, préférablement 0,10-2 mg/kg de cobalt à un kilogramme de fourrage prêt.

4. Utilisation selon la revendication 1 ou 2, charactérisé en ce que, dans le cas de volaille le mélange d'additif alimentaire contient 1,5-150 mg/kg, préférablement 100-150 mg/kg de zinc; 0,15-15 mg/kg, préférablement 13-15 mg/kg de cuivre; 5-500 mg/kg, préférablement 80-500 mg/kg de fer; 1,5-150 mg/kg, préférablement 30-150 mg/kg de manganèse; 0,05-0,70 mg/kg, préférablement 0,4-0,5 mg/kg de iode; 0,01-0,50 mg/kg, préférablement 0,40-0,50 mg/kg de sélénium et 0,02-2 mg/kg, préférablement 0,10-2 mg/kg de cobalt à un kilogramme de fourrage prêt.

Fig. 1

Fig. 2

**Fig. 3**

**Fig. 4**

Fig. 5

Fig. 6

**Fig. 7**

**Fig. 8**

**Fig. 9**

**Fig. 10**

Fig. 11

Fig. 12

Fig. 13

Fig. 14

**Fig. 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- HU P0303225
- HU P0100167
- HU 42042